# EUROPÄISCHE PATENTSCHRIFT

(11) **EP 2 215 340 B1**
(45) Veröffentlichungstag und Bekanntmachung des Hinweises auf die Patenterteilung: **08.07.2015**
(21) Anmeldenummer: 08854782.3
(22) Anmeldetag: 18.11.2008
(51) Int. Cl.: F02C 6/12, F02C 7/24, F16F 1/32

(54) **HITZESCHILD UND TURBOLADER MIT EINEM HITZESCHILD**
HEAT SHIELD AND TURBOCHARGER HAVING A HEAT SHIELD
ÉCRAN THERMIQUE ET TURBOCOMPRESSEUR MUNI D'UN ÉCRAN THERMIQUE

(30) Priorität: 28.11.2007 DE 102007057309
(43) Veröffentlichungstag der Anmeldung: 11.08.2010
(73) Patentinhaber: Continental Automotive GmbH, 30165 Hannover (DE)
(72) Erfinder: FÄTH, Holger, 67136 Fussgönheim (DE); BÖNING, Ralf, 67829 Reiffelbach (DE); UHLIG, Christian, 67549 Worms (DE); VETTER, Robert, 67551 Worms (DE)
(86) Internationale Anmeldenummer: PCT/EP2008/065760
(87) Internationale Veröffentlichungsnummer: WO 2009/068460

(56) Entgegenhaltungen:
- WO-A-2006/046892
- WO-A-2007/111759
- US-A- 5 087 176
- US-A1- 2006 010 880

## Beschreibung

Die Erfindung betrifft ein Hitzeschild insbesondere bei einem Turbolader und einen Turbolader mit einem solchen Hitzeschild, zum Schutz einer Lagerung des Turboladers vor dem Wärmeeintrag durch ein warmes oder heißes Medium, wie heißem Abgas.

Turbolader weisen normalerweise ein Gehäuse auf, in dem ein Turbinenrad und ein Verdichterrad auf einer Welle drehbar mittels Radiallagern gelagert sind. Dabei kann die Welle Umdrehungen von beispielsweise bis zu 300.000 U/min erreichen. Um auftretende Axialkräfte aufzunehmen kann auch beispielsweise wenigstens ein Axiallager vorgesehen werden. Die Lager werden hierbei mittels einem entsprechenden Schmieröl geschmiert.

Durch die hohen Abgastemperaturen bei dem Turbolader entsteht ein hoher Wärmeeintrag in die Lagerung. Dies führt zu einer Verkokung des Schmieröls zum Schmieren der Lager und im schlimmsten Fall zu einem Totalausfall der Lagerung. Durch einen Hitzeschild zwischen der Turbine und der Lagerung wird der Wärmeeintrag reduziert und eine Schmierölkohlebildung vermieden.

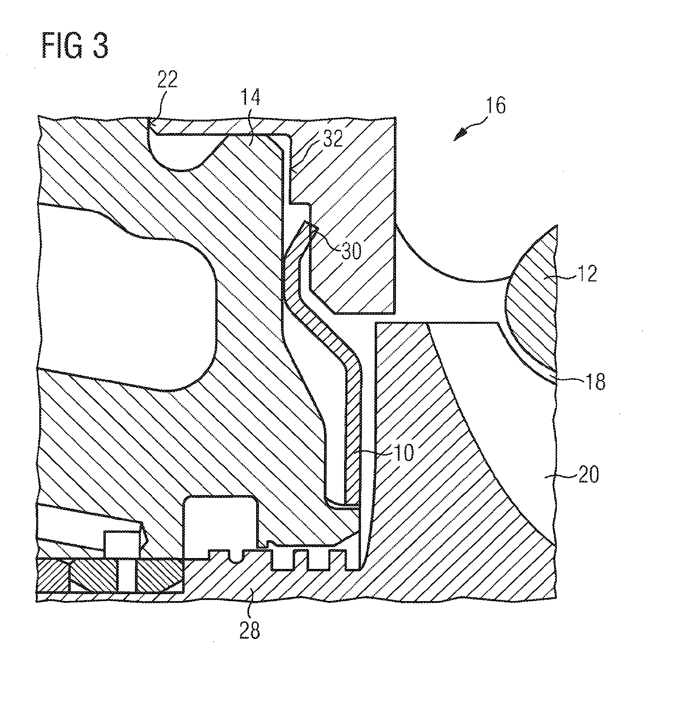

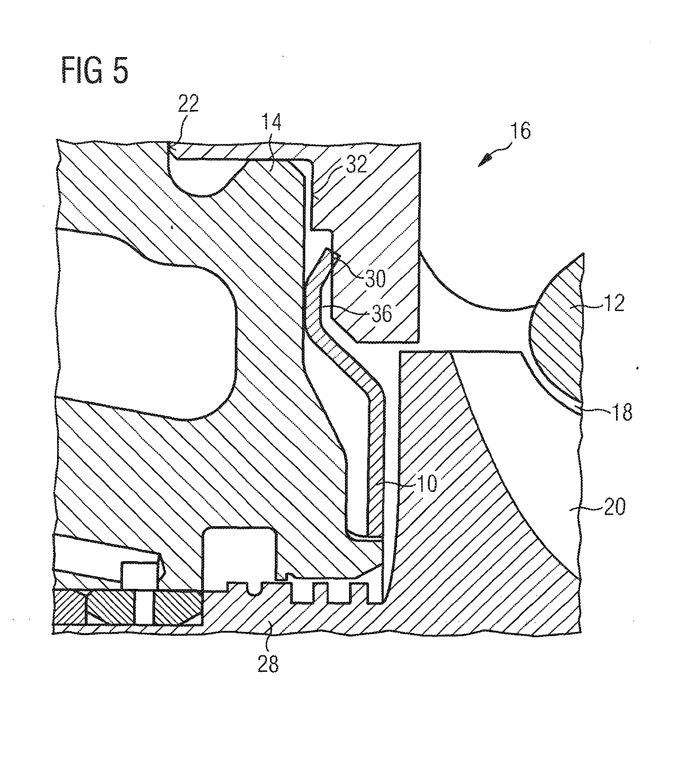

Aus dem Stand der Technik ist bisher bekannt, ein Hitzeschild vorzusehen, welches entweder in Reihe oder in Parallelschaltung zwischen dem Lagergehäusen und dem Turbinengehäuse verbaut wird. Bei einer Reihenschaltung des Hitzeschildes hat die Dickentoleranz einen Einfluss auf den axialen Konturspalt zwischen Turbinenrad und Turbinengehäuse, was sich negativ auf den Wirkungsgrad der Turbine auswirkt. Bei einer Parallelschaltung muss der Hitzeschild als Feder ausgeführt sein, die den Toleranzausgleich und die Wärmedehnung der Bauteile ermöglicht. Die Feder wird entweder durch drei oder mehr radial nach außen angeordnete Federarme oder einen umlaufenden Kragen ausgebildet. Eine solche Feder hat jedoch den Nachteil, wie im Folgenden noch näher mit Bezug beispielsweise auf die Fig. 3 und 5 beschrieben wird, dass die Federarme leicht abreißen können bzw. der umlaufende Kragen eine hohe Federkraft bei einem geringen Federweg aufweist.

Das Dokument US 2006/0010880 A1 offenbart dagegen eine mehrteilige Dichtungseinheit, die einen kreisförmigen Hitzeschild beinhaltet. Der Hitzeschild ist zwischen dem Turbinengehäuse und Kompressorgehäuse angeordnet und weist eine Vielzahl von Schlitzen auf die in radialer Richtung angeordnet sind und zur Reduzierung thermisch bedingter Spannungen im Hitzeschild dienen. Zur Fixierung der Dichtungseinheit ist ein separates elastisches Teil zwischen der Dichtung und dem Hitzeschild vorgesehen.

Demnach ist es die Aufgabe der vorliegenden Erfindung, einen verbesserten Hitzeschild bzw. einen Turbolader mit einem verbesserten Hitzeschild bereitzustellen, bei welchem der Wärmeeintrag in eine Lagerung des Turboladers verringert werden kann.

Diese Aufgabe wird durch einen Hitzeschild mit den Merkmalen des Patentanspruchs 1 gelöst.

Demgemäß wird erfindungsgemäß ein Hitzeschild für einen Turbolader bereitgestellt, wobei der Hitzeschild zwischen einem Lagergehäuse und einem Turbinengehäuse des Turboladers anordenbar ist und wobei der Hitzeschild in Form einer Scheibe oder einer ein- oder mehrfach abgestuften Topfform ausgebildet ist und die Scheibe oder die Topfform einen, in einer zu ihrer Mittelachse senkrecht angeordneten Ebene liegenden, Außenrand aufweist.
Der Außenrand ist mit wenigstens einem in Umfangsrichtung angeordneten Aussparungsabschnitt versehenund der jeweilige Aussparungsabschnitt bildet mit dem Außenrand einen Stegabschnitt, wobei der Stegabschnitt in axialer Richtung, d.h. in Richtung Turbinengehäuse oder in Richtung Lagergehäuse, nach Art einer Wellfeder gebogen ist, um einen Federarm mit einem axialen Federweg zu bilden.

Der Hitzeschild hat dabei den Vorteil, dass durch den Stegabschnitt, der als Federarm in axialer Richtung gebogen ist, ein längerer Federarm realisiert werden kann als dies bei den bekannten Hitzeschildern der Fall ist, deren Federarme radial angeordnet und verhältnismäßig kurz sind. Die längeren Federarme ermöglichen wiederum eine flache Gestaltung der Federkennlinie, d.h. dass über den Arbeitsbereich der Feder die Federkraft konstant bleibt. Durch die flache Kennlinie kann der axiale Federweg verhältnismäßig groß gewählt werden, wodurch ein Toleranzausgleich und ein Ausgleich der Wärmedehnung ohne Abfallen der Federkraft ermöglicht wird. Hierdurch kann gewährleistet werden, dass der Hitzeschild mit seinem Federarm bzw. Federarmen nicht lose wird.

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform können ein oder mehrere Stegabschnitte an einer Stelle, beispielsweise auf der Seite oder in der Mitte oder an einer anderen Position des Stegs unterbrochen sein. Der jeweilige Teil des Stegabschnitts wird dabei entsprechend in axialer Richtung gebogen. Der jeweilige Stegabschnitt oder ein Teil des Stegabschnitts wird dabei beispielsweise um ein vorbestimmtes Maß in axialer Richtung gebogen, um einen vorbestimmten Federweg des Federarms einzustellen. Dadurch, dass der Stegabschnitt in axialer Richtung gebogen ist, kann ein größerer Federweg realisiert werden als bei den bekannten Hitzeschildern mit ihren radialen Federarmen, die nur leicht abgewinkelt gebogen sind.

Je länger beispielsweise der Aussparungsabschnitt gewählt ist, umso länger wird auch entsprechend der Stegabschnitt und umso weiter kann der Stegabschnitt in axialer Richtung gebogen werden. Die Form bzw. Länge des Stegabschnitts ist dabei beispielsweise so gewählt, dass der Stegabschnitt einerseits ausreichenden in axialer Richtung gebogen werden kann und andererseits eine ausreichende Federkraft realisiert werden kann.

In einer weiteren erfindungsgemäßen Ausführungsform weist der Stegabschnitt eine durchgehend gleiche Dicke oder wenigstens einen oder mehrere Abschnitte mit einer unterschiedlichen Dicke auf. Mit anderen Worten, die Dicke des Stegabschnitts kann gleich bleibend ausgebildet sein oder variieren.

In einer anderen erfindungsgemäßen Ausführungsform kann der Hitzeschild ein oder eine Vielzahl von Stegabschnitten aufweisen, wobei die Stegabschnitte alle in einer Bahn am Außenrand angeordnet sind. Die Stegabschnitte können auch innerhalb einer Bahn radial versetzt sein. In diesem Zusammenhang kann nicht nur eine Bahn mit wenigstens einem oder einer Vielzahl von Stegabschnitten vorgesehen sein, sondern wenigstens zwei oder eine Vielzahl von Bahnen. Die Stegabschnitte einer Bahn können dabei identisch oder unterschiedlich ausgebildet sein. Entsprechendes gilt auch für die Stegabschnitte bei mehreren Bahnen, so können die Stegabschnitte von zwei oder mehr Bahnen gleich oder unterschiedlich ausgebildet sein, je nach Funktion und Einsatzzweck. Die Stegabschnitte der Bahnen können dabei auch zueinander versetzt angeordnet sein oder im Wesentlichen fluchtend. Auf diese Weise lassen sich eine Vielzahl von Hitzeschildern mit Federarmen realisieren, die an bauliche Gegebenheiten oder an unterschiedliche Einsatzzwecke und Funktionen angepasst werden können.

In einer weiteren Ausführungsform können die Stegabschnitte bzw. die Teile der Stegabschnitte bei einer Bahn oder bei mehreren Bahnen um das gleiche Maß oder unterschiedlich stark in axialer Richtung gebogen sein, je nach Funktion und Einsatzzweck oder baulichen Gegebenheiten.

Gemäß einer erfindungsgemäßen Ausführungsform ist der Hitzeschild innerhalb des Außenrands in axialer Richtung abgestuft ausgebildet, dabei können eine, zwei oder mehrere Abstufungen ausgebildet sein. Diese Abstufung kann beispielsweise vorgesehen werden, um den Hitzeschild geeignet zwischen das Lagergehäuse und das Laufradgehäuse eines Turboladers einzupassen. Grundsätzlich ist es aber auch denkbar, dass der Hitzeschild im Wesentlichen als flache Scheibe ausgebildet ist, abgesehen von den in axialer Richtung gebogenen Federarmen.

In einer anderen erfindungsgemäßen Ausführungsform besteht der Hitzeschild je nach Einsatzort aus einem hitzebeständigen Werkstoff. Mit anderen Worten abhängig davon, welchen Temperaturen der Hitzeschild ausgesetzt ist wird auch sein Material gewählt. Ein solches hitzebeständiges Material kann beispielsweise ein geeigneter Metallwerkstoff oder eine geeignete Metalllegierung oder ein anderes geeignetes Material oder eine Materialkombination sein, sofern sich diese dazu eignen Federarme auszubilden.

Gemäß einer weiteren erfindungsgemäßen Ausführungsform ist der Hitzeschild als gebogenes Blechteil herstellbar.

Die Erfindung wird nachfolgend anhand der in den schematischen Figuren der Zeichnungen angegebenen Ausführungsbeispiele näher erläutert. Es zeigen:
- Fig. 1: ein Ausschnitt eines sog. "Sandwich"-Hitzeschildes in eingebautem Zustand gemäß dem Stand der Technik;
- Fig. 2a-c: drei Perspektivansichten des "Sandwich"-Hitzeschildes gemäß Fig. 1;
- Fig. 3: ein Ausschnitt eines sog. Federarm-Hitzeschildes in eingebautem Zustand gemäß dem Stand der Technik;
- Fig. 4a-c: drei Perspektivansichten des Federarm-Hitzeschildes gemäß Fig. 3;
- Fig. 5: ein Ausschnitt eines Hitzeschildes mit umlaufendem Bund in eingebautem Zustand gemäß dem Stand der Technik;
- Fig. 6a-c: drei Perspektivansichten des Hitzeschildes mit umlaufendem Bund gemäß Fig. 5;
- Fig. 7a-c: drei Perspektivansichten eines erfindungsgemäßen Wellfeder-Hitzeschildes;
- Fig. 8: ein Ausschnitt eines Wellfeder-Hitzeschildes in eingebautem Zustand gemäß der Erfindung, wobei das Turbinengehäuse und das Lagergehäuse über eine Schraubenverbindung miteinander verbunden sind;
- Fig. 9: ein Ausschnitt des Wellfeder-Hitzeschildes, gemäß den Fig. 7a-7c, in eingebautem Zustand, wobei das Turbinengehäuse und das Lagergehäuse über eine Spannbandverbindung miteinander verbunden sind; und
- Fi. 10: ein Diagramm in welchem die Federkennlinien des Wellfeder-Hitzeschilds und des Federhitzeschilds mit radial angeordneten Federarmen verglichen wird.

In allen Figuren sind gleiche bzw. funktionsgleiche Elemente und Vorrichtungen - sofern nichts anderes angegeben ist - mit denselben Bezugszeichen versehen worden.

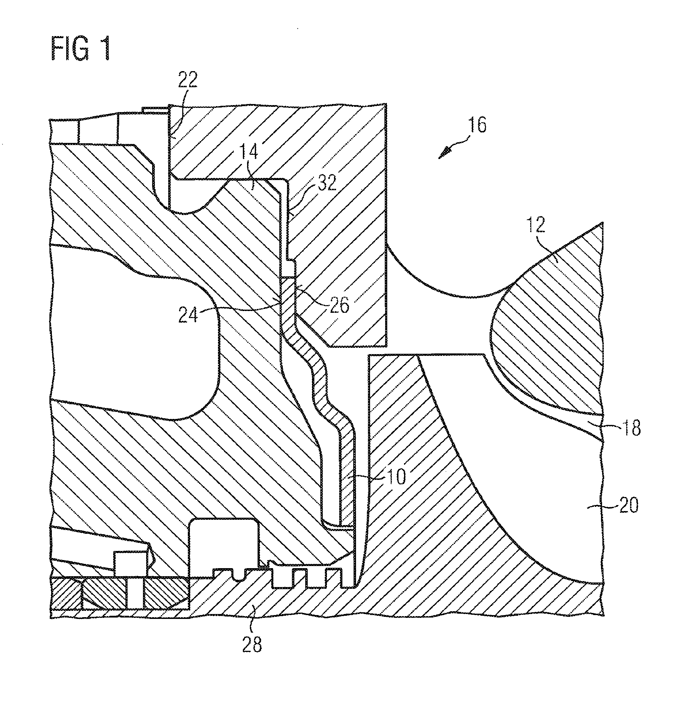

In Fig. 1 ist ein Ausschnitt eines sog. "Sandwich"-Hitzeschildes 10 in eingebautem Zustand gemäß dem Stand der Technik gezeigt. Der "Sandwich"-Hitzeschild 10 liegt dabei zwischen einem Turbinengehäuse 12 und einem Lagergehäuse 14 eines Turboladers 16 und wird mit diesen Bauteilen axial in Reihe verspannt, entweder durch eine Schraubenverbindung oder durch eine Spannbandverbindung.

Der "Sandwich"-Hitzeschild 10 hat jedoch das Problem, dass die Dickentoleranz des Hitzeschildes 10 einen Einfluss auf den axialen Konturspalt 18 zwischen einem Turbinenrad 20 des Turboladers 16 und dem Turbinengehäuse 12 hat. Der Konturspalt 18 hat wiederum Einfluss auf die Thermodynamik und somit den Wirkungsgrad der Turbine. Durch die Dickentoleranz des "Sandwich"-Hitzeschilds 10, das als Blechteil oder Drehteil hergestellt werden kann, muss mehr axialer Abstand zwischen dem Turbinenrad 20 und dem Turbinengehäuse 12 vorgesehen werden. Somit ist der Wirkungsgrad der Turbine schlechter.

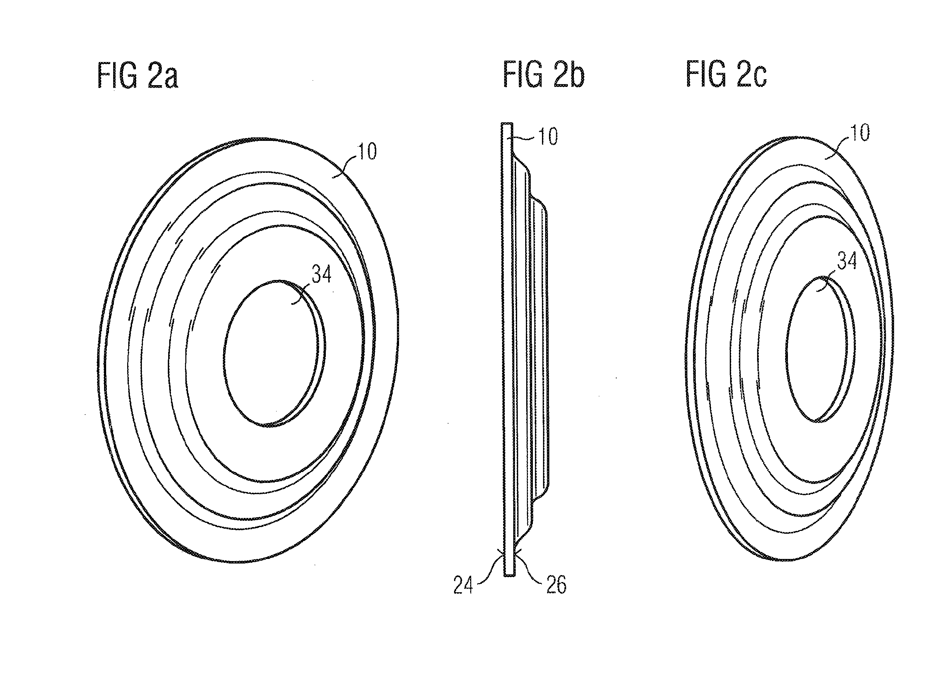

In den Fig. 2a und 2c ist der "Sandwich"-Hitzeschild 10 in zwei Perspektivansichten gezeigt, wobei die Ansichten jeweils der "Sandwich"-Hitzeschild 10 von der Seite aus zeigen, mit der Anlagefläche 22 für das Turbinengehäuse 12. In Fig. 2b ist des Weiteren eine Seitenansicht des "Sandwich"-Hitzeschildes 10 gezeigt, wobei einmal die ebene Auflagefläche 24 für das Lagergehäuse und einmal die ebene Auflagefläche 26 für das Turbinengehäuse gezeigt ist. Der "Sandwich"-Hitzeschild 10 ist dabei zu der Seite des Turbinengehäuses in zwei Stufen nach außen gewölbt und weist eine Öffnung 34 auf, um auf das Lagergehäuse 14 bzw. die Welle 28 des Turboladers 16 aufgeschoben zu werden.

In Fig. 3 ist des Weiteren ein Ausschnitt eines sog. Federarm-Hitzeschildes 10 in eingebautem Zustand gemäß dem Stand der Technik dargestellt. Das Turbinengehäuse 12 liegt dabei axial direkt an dem Lagergehäuse 14 an. Der Federarm-Hitzeschild 10 wird dabei parallel zwischen das Lagergehäuse 14 und das Turbinengehäuse 12 verspannt und hat somit keinen Einfluss auf den Konturspalt 18. In Fig. 3 ist eine Anlagefläche 22 für das Turbinengehäuse 12 an dem Lagergehäuse 14, beispielsweise bei einer Spannbandverbindung, gezeigt. Des Weiteren ist ein radial federnder Arm 30 des Hitzeschildes 10 gezeigt, wie er zwischen dem Lagergehäuse 14 und dem Turbinengehäuse 12 eingespannt ist. Weiter ist ein axialer Spalt 32 zwischen dem Turbinengehäuse 12 und dem Lagergehäuse 14 dargestellt, der durch die Anlagefläche 22 bestimmt wird.

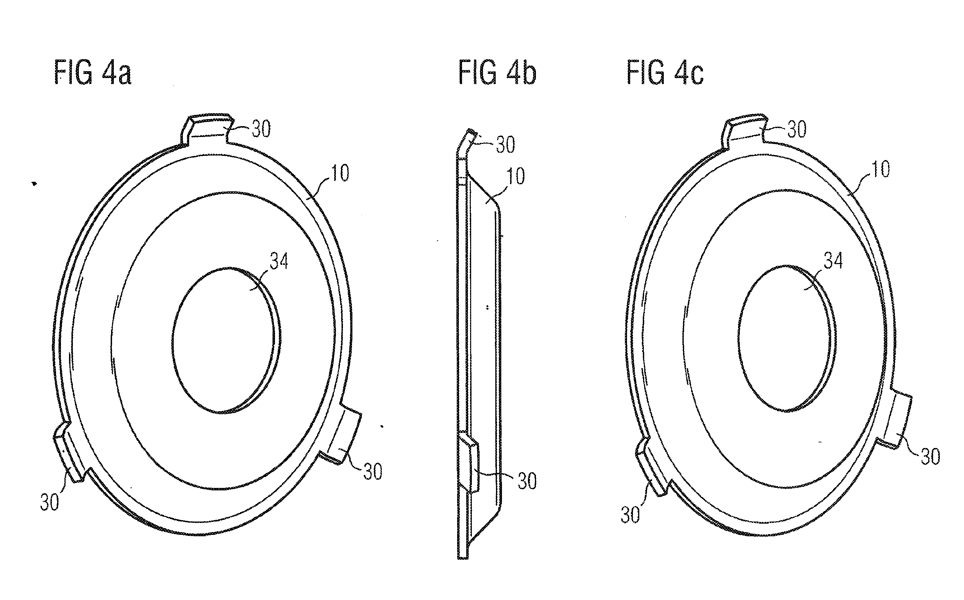

In den Fig. 4a und 4c ist eine Perspektivansicht des Federarm-Hitzeschildes 10 dargestellt, wobei das Federarm-Hitzschild 10 von der Seite gezeigt ist, das dem Turbinenrad in eingebautem Zustand zugewandt ist. Der Hitzeschild 10 weist dabei drei Federarme 30 auf, die nach außen gebogen sind. In Fig. 4b ist weiter eine Seitenansicht des Federarm-Hitzeschildes 10 gezeigt. Der Hitzeschild 10 ist dabei auf der Seite des Turbinenrades nach außen gewölbt. und weist in der Mitte eine Öffnung 34 auf, um auf die Welle 30 des Turboladers 16 bzw. auf das Lagergehäuse 14 aufgeschoben zu werden.

Der Federarm-Hitzeschild 10 hat den Nachteil, dass sich durch die schnelle Aufheizung der Bauteile sich die Bauteile sehr schnell ausdehnen. Die kurzen Federarme 30 sind bedingt durch den Bauraum mit einem sehr kleinen Eckenradius angebunden, wodurch es beim Ausdehnen zu thermomechanischen Überlastungen und zur Verformung der Bauteile in diesem Eckenradius kommen kann. Durch eine solche Überlastung können die Federarme 30 einreißen bzw. ganz abreißen. Damit wird der Hitzeschild 10 lose und kann sich mitdrehen und verliert somit die Funktion der Wärmeabschirmung. Er kann dabei außerdem in Kontakt mit dem Turbinenrad kommen, was zu einem Totalausfall des Turboladers führt.

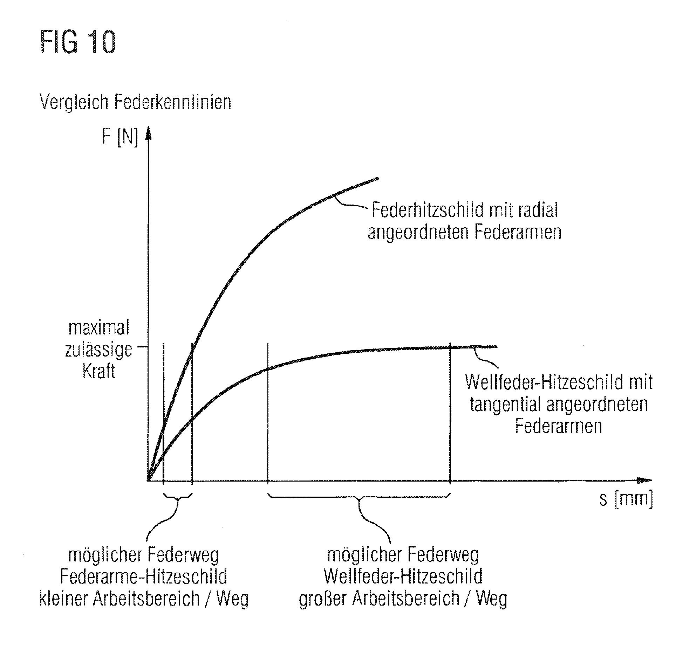

Ein zusätzliches Problem der kurzen Federarme 30 ist die steile Kennlinie der Feder, wodurch die Federkraft über den Arbeitsbereich bei kleiner Wegänderung sehr stark ansteigt, wie in Fig. 10 gezeigt ist. Damit die Federkraft nicht zu hoch wird, und damit die Gefahr einer plastischen Verformung der Federarme 30 und einer schwierigen Montage steigt, ist der maximal mögliche Federweg und damit auch der Arbeitsbereich sehr klein. Dadurch, dass die Feder einerseits die Toleranzkette und dynamische Wärmedehnung des Einbauraums abdecken muss, andererseits durch die steile Kennlinie und den begrenzten Federweg/Arbeitsbereich definiert ist, kann es im Betrieb zu einem Verlust der Vorspannkraft führen. Diese Problematik ist dem Stand der Technik bekannt und führt immer wieder zu einem Ausfall des Turboladers.

In Fig. 5 ist weiter ein Ausschnitt eines Hitzeschildes 10 mit einem umlaufendem Bund 36 in eingebautem Zustand gemäß dem Stand der Technik gezeigt. Der Hitzeschild 10 ist dabei ebenfalls wie der Hitzeschild 10 mit den Federarmen 30 eingebaut. Das Turbinengehäuse 12 liegt hierbei axial direkt an dem Lagergehäuse 14 an, wobei beispielsweise eine Anlagefläche 22 für das Turbinengehäuse 12 an dem Lagergehäuse 14 bei einer Spannbandverbindung vorgesehen ist. Der Hitzeschild 10 mit dem umlaufenden Rand 36 wird parallel zwischen dem Lagergehäuse 14 und dem Turbinengehäuse 12 verspannt, bzw. dessen umlaufender Bund 36 wird federnd vorgespannt. Der Hitzeschild 10 hat hierdurch keinen Einfluss auf den Konturspalt 18 zwischen dem Turbinenrad 20 und dem Turbinengehäuse 12. In Fig. 5 ist des Weiteren ein axialer Spalt 32 zwischen dem Turbinengehäuse 12 und dem Lagergehäuse 14 dargestellt, der durch die Anlagefläche 22 für das Turbinengehäuse 12 bestimmt wird.

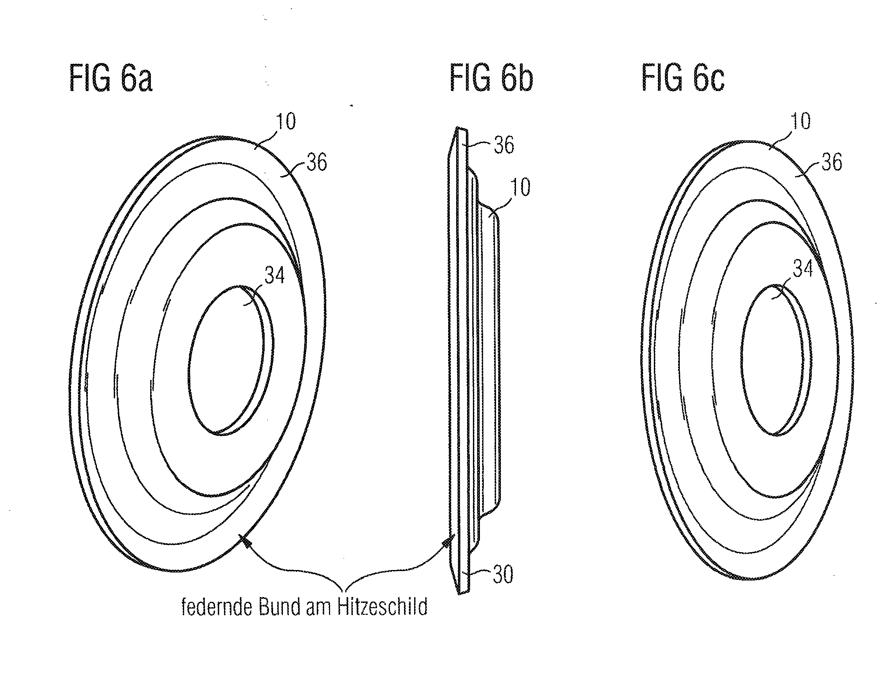

In den Fig. 6a und 6c ist der Hitzeschild 10 mit umlaufendem Bund 36 in einer jeweiligen Perspektivansicht gezeigt, wobei der Hitzeschild 10 von der Seite gezeigt ist, das dem Turbinenrad in eingebautem Zustand zugewandt ist. Des Weiteren zeigt Fig. 6b eine Seitenansicht des Hitzeschildes 10. Der Hitzeschild 10 weist dabei eine abgestufte Wölbung 38 nach außen zu dem Turbinenrad hin auf und einen federnden Bund 36. Des Weiteren ist eine Öffnung 34 vorgesehen, um den Hitzeschild 10 auf die Welle des Turboladers bzw. auf das Lagergehäuse 14 aufzuschieben.

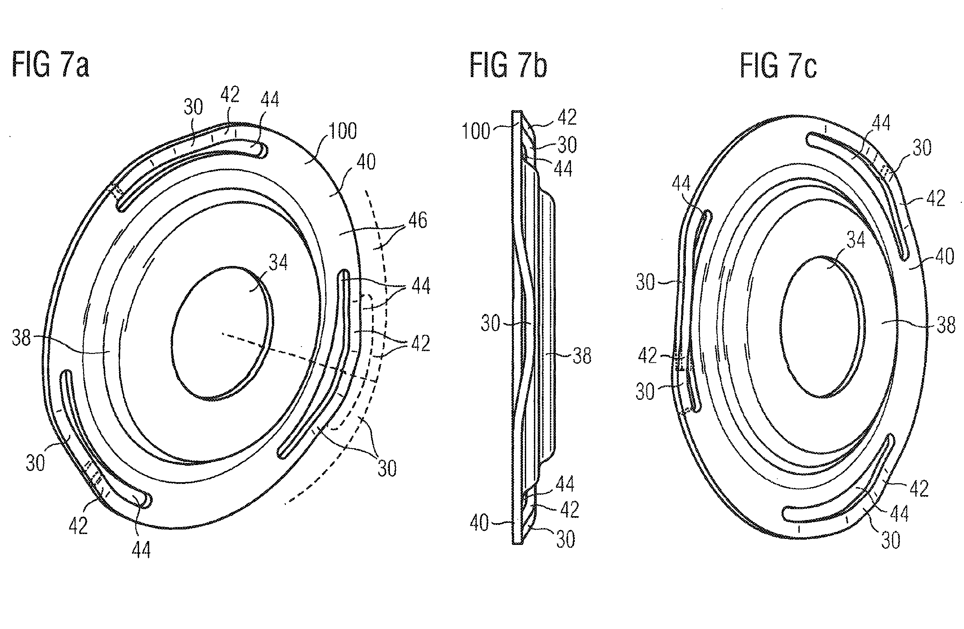

In den Fig. 7a und 7c ist nun ein Wellfeder-Hitzeschild 100 gemäß der Erfindung in einer Perspektivansicht dargestellt, von der Seite aus, in der es einem Turbinenrad in eingebautem Zustand zugewandt ist. Der Wellfeder-Hitzeschild 100 weist dabei beispielsweise eine Öffnung 34 auf, zum Anbringen des Hitzeschildes 100 an einem Turbolader 16. Des Weiteren ist der Wellfeder-Hitzeschild 100 in Fig. 7b in einer Seitenansicht dargestellt.

Der Wellfeder-Hitzeschild 100 gemäß der Erfindung weist einen umlaufenden Rand 40 auf, an welchem beispielsweise drei Stegabschnitte 42 angeordnet sind, die in axialer Richtung gewölbt sind, um jeweils einen federnden Abschnitt oder einen Federarm 30 bereitzustellen. Die Stegabschnitte 42 werden dabei in dem umlaufenden Rand 40 gebildet, indem der Rand 40 jeweils mit einem entsprechenden Aussparungsabschnitt 44 versehen wird. Bei den länglichen Stegabschnitten 42, wie sie in Fig. 7a und 7c gezeigt sind, ist entsprechend ein länglicher Stegabschnitt 42 in Umfangsrichtung an dem umlaufenden Rand 40 des Hitzeschildes 100 vorgesehen, wobei hierzu jeweils ein länglicher Aussparungsabschnitt 44 in Umfangsrichtung in dem umlaufenden Rand 40 angeordnet ist, um den jeweiligen Stegabschnitt 42 zu bilden. Der Stegabschnitt 42 kann dabei jeweils eine gleich bleibende Dicke aufweisen, wie in Fig. 7a und 7c dargestellt ist, oder über die Länge unterschiedlich dick ausgebildet sein, je nach Funktion oder Einsatzzweck.

Die jeweiligen Stegabschnitte 42 werden in axialer Richtung gebogen, also in axialer Richtung gewölbt, um einen Federarm 30 mit einem geeigneten Federweg einzustellen. Der Federweg kann dabei größer ausgebildet werden, wie der Federweg des Hitzeschildes 10 mit einem umlaufenden Bund 36, wie es in den Fig. 5 und 6 dargestellt ist.

Der Wellfeder-Hitzeschild 100 kann dabei wenigstens einen, oder mehr Stegabschnitte 42 aufweisen, die als Federarme 30 in axialer Richtung gebogen sind. Die Stegabschnitte 42 können dabei gleichmäßig, wie in Fig. 7a und 7c gezeigt ist, oder unregelmäßig in Umfangsrichtung an dem umlaufenden Rand 40 des Hitzeschildes 100 angeordnet sein, je nach Funktion oder Einsatzzweck. Die Stegabschnitte 42 können dabei jeweils in ihrer Form und/oder Dimensionierung identisch oder unterschiedlich ausgebildet sein. Des Weiteren können statt einer Bahn 46 mit Stegabschnitten 42, wie in Fig. 7a und 7c gezeigt ist, auch zwei, und mehr Bahnen mit jeweils wenigstens einem oder mehreren Stegabschnitten 42 vorgesehen sein. In Fig. 7a ist dabei eine zweite Bahn 46 mit einem weiteren Stegabschnitt 42 mit einer gestrichelten Linie angedeutet, wobei die Stegabschnitte 42 der beiden Bahnen 46 beispielsweise im Wesentlichen fluchtend angeordnet sind. Alternativ können die Stegabschnitte 42 auch versetzt oder teilweise versetzt zueinander angeordnet sein (nicht dargestellt).

Des Weiteren können die Stegabschnitte 42 der Bahnen 46 jeweils in ihrer Form und/oder Dimensionierung gleich oder verschieden ausgebildet sein. So kann die äußere Bahn 46 die längsten Stegabschnitte 42 aufweisen und die innerste Bahn 46 die kürzesten Stegabschnitte 42 und umgekehrt, wobei die Stegabschnitte 42 der Bahnen 46 beispielsweise die gleiche Form oder eine unterschiedliche Form und Dimensionierung aufweisen können. Des Weiteren können die Stegabschnitte 42 einer Bahn 46 oder mehrerer Bahnen 46 gleich oder unterschiedlich stark gewölbt ausgebildet sein und den gleichen oder einen unterschiedlichen Federweg aufweisen. Grundsätzlich können die Stegabschnitte 42 einer Bahn 46, sowie die Stegabschnitte 42 mehrerer Bahnen 46 beliebig variiert werden, je nach Funktion und Einsatzzweck.

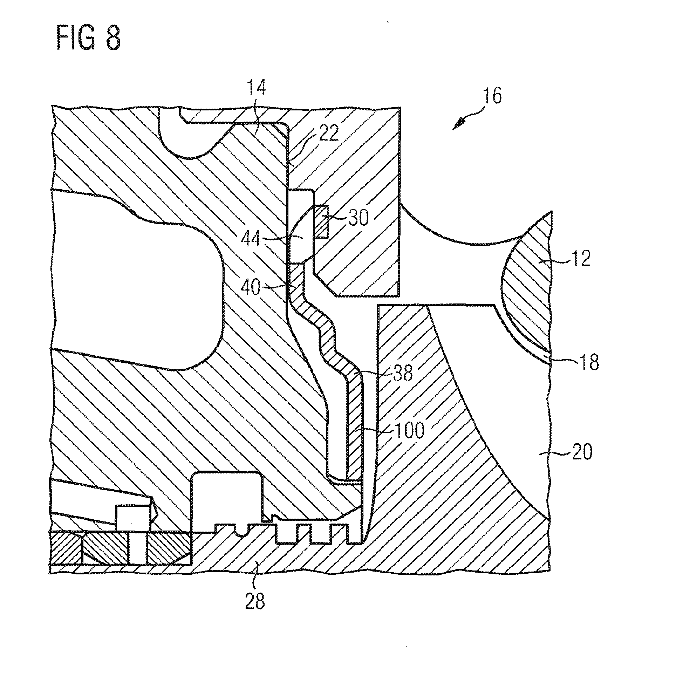

In Fig. 8 ist nun ein Ausschnitt des Wellfeder-Hitzeschildes 100 in eingebautem Zustand gezeigt, wobei das Turbinengehäuse 12 und das Lagergehäuse 14 über eine Schraubenverbindung miteinander verbunden sind. In Fig. 8 ist dabei eine entsprechende Anlagefläche 22 des Turbinengehäuses 12 dargestellt.

Durch die in axialer Richtung gebogenen Stegabschnitte 42 oder Federarme 30 können, bei gleichem Bauraum, wesentlich längere Federarme 30 realisiert werden. Die längeren Federarme 30 ermöglichen wiederum eine flache Gestaltung der Federkennlinie, wie sie in Fig. 10 gezeigt ist, d.h. dass über den Arbeitsbereich der Feder die Federkraft konstant bleibt. Durch die flache Kennlinie kann der axiale Federweg sehr groß gewählt werden, wodurch ein Toleranzausgleich und ein Ausgleich der Wärmedehnung ohne Abfallen der Federkraft ermöglicht wird. Somit ist immer gewährleistet, dass die Feder nicht lose wird.

Durch die Form der Federarme 30 oder der Biegung der Stegabschnitte 42 kann das Niveau der Federkraft im Arbeitsbereich festgelegt werden. Es ist auch denkbar die Federarme 30, entgegen der Darstellung in den Fig. 7a und 7c, in Umfangsrichtung nicht geschlossen auszubilden. Dem gemäß kann ein Federarm 30 auch auf einer Seite oder in der Mitte unterbrochen, also offen gestaltet sein, wie in den Fig. 7a und 7c mit einer gestrichelten Linie angedeutet ist. Dadurch kann der jeweilige Abschnitt des Federarms noch weiter in axialer Richtung gebogen werden, um einen längeren Federweg zu erzielen, wobei die Abschnitte des Federarms 30 gleich oder unterschiedlich stark in axialer Richtung gebogen werden können.

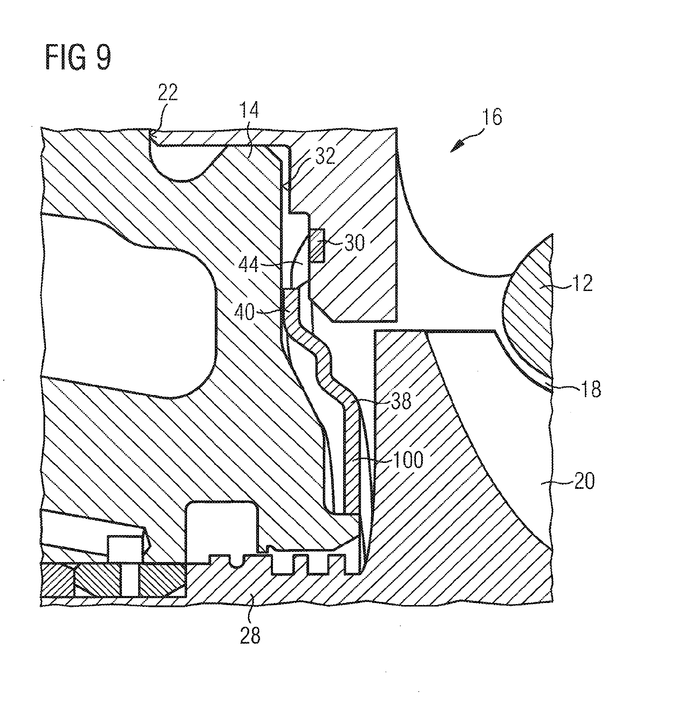

In Fig. 9 ist des Weiteren ein Ausschnitt des Wellfeder-Hitzeschildes 100 in eingebautem Zustand gezeigt, wobei das Turbinengehäuse 12 und das Lagergehäuse 14 über eine Spannbandverbindung miteinander verbunden sind. In Fig. 9 ist dabei eine entsprechende Anlagefläche 22 des Turbinengehäuses 12 dargestellt und des Weiteren ein axialer Spalt 32 zwischen dem Turbinengehäuse 12 und dem Lagergehäuse 14. Dabei ist der Wellfeder-Hitzeschild 100 mit seiner Öffnung 34 über die Welle 28 des Turboladers 16 und auf einen Vorsprung des Lagergehäuses 14 aufgeschoben. Dabei ist ein Stegabschnitt 42 gezeigt der in axialer Richtung gegen das Turbinengehäuse 12 gebogen ist, um den Federarm 30 zu bilden, wobei das Lagergehäuse 14 und das Turbinengehäuse 12 gegeneinander verspannt sind beispielsweise über eine Spannbandverbindung. Der Wellfeder-Hitzeschild 100 weist im vorliegenden Fall eine abgestufte Topfform auf. Die zuvor gemachten Ausführungen gelten jedoch entsprechend auch für einen Wellfeder-Hitzeschild 100 in Form einer Scheibe.

Die zuvor beschriebenen Ausführungsformen sind auch miteinander kombinierbar, insbesondere einzelne Merkmale davon.

## Patentansprüche

1. Hitzeschild (100) für einen Turbolader, der zwischen einem Lagergehäuse (14) und einem Turbinengehäuse (12) des Turboladers anordenbar ist,
- wobei der Hitzeschild in Form einer Scheibe oder einer ein- oder mehrfach abgestuften Topfform ausgebildet ist,
- wobei die Scheibe oder die Topfform einen, in einer zu ihrer Mittelachse senkrecht angeordneten Ebene liegenden, Außenrand (40) aufweist,
**dadurch gekennzeichnet,**
- **dass** der Außenrand (40) mit wenigstens einem in Umfangsrichtung angeordneten Aussparungsabschnitt (44) versehen ist, und
- **dass** der jeweilige Aussparungsabschnitt (44) mit dem Außenrand (40) einen in Umfangsrichtung verlaufenden Stegabschnitt (42) bildet und der Stegabschnitt (42) in axialer Richtung nach Art einer Wellfeder gebogen ist, um einen Federarm (30) mit einem axialen Federweg zu bilden.

2. Hitzeschild nach Anspruch 1,
**dadurch gekennzeichnet,**
**dass** wenigstens ein Stegabschnitt (42) an einer Stelle in Umfangsrichtung unterbrochen ist, wobei die so entstehenden Teilabschnitte des Stegabschnittes (42) in axialer Richtung gebogen sind.

3. Hitzeschild nach einem der Ansprüche 1 oder 2,
**dadurch gekennzeichnet,**
**dass** der Stegabschnitt (42) eine durchgehend gleiche Dicke oder wenigstens einen oder mehrere Abschnitte mit einer unterschiedlichen Dicke aufweist.

4. Hitzeschild nach einem der Ansprüche 1 bis 3,
**dadurch gekennzeichnet,**
**dass** der Hitzeschild (100) ein oder mehr Stegabschnitte (42) aufweist, wobei die Stegabschnitte (42) in einer konzentrisch zur Mittelachse umlaufenden Bahn (46) am Außenrand (40) angeordnet sind.

5. Hitzeschild nach Anspruch 4,
**dadurch gekennzeichnet,**
**dass** der Hitzeschild (100) wenigstens eine oder mehrere zusätzliche Bahnen (46) aufweist, wobei die Bahnen (46) jeweils ein oder mehr Stegabschnitte (42) aufweisen und wobei die Bahnen (46)jeweils gleich viele oder unterschiedlich viele Stegabschnitte (42) aufweisen.

6. Hitzeschild nach wenigstens einem der Ansprüche 1 bis 5,
**dadurch gekennzeichnet,**
**dass** die Stegabschnitte (42) einer oder mehrerer Bahnen (46) hinsichtlich Form, Dimensionierung oder Anordnung gleich oder unterschiedlich sind.

7. Hitzeschild nach einem der Ansprüche 1 bis 6,
**dadurch gekennzeichnet,**
**dass** die Stegabschnitte (42) wenigstens zweier oder mehrerer Bahnen (46) zueinander zumindest teilweise versetzt oder im Wesentlichen fluchtend angeordnet sind.

8. Hitzeschild nach einem der Ansprüche 1 bis 7,
**dadurch gekennzeichnet,**
**dass** die Stegabschnitte (42) um ein vorbestimmtes gleiches oder unterschiedliches Maß in axialer Richtung gebogen sind.

9. Hitzeschild nach einem der Ansprüche 1 bis 8,
**dadurch gekennzeichnet,**
**dass** der Hitzeschild (100) aus einem hitzebeständigen Metallwerkstoff, insbesondere einer Metalllegierung besteht.

10. Hitzeschild nach einem der Ansprüche 1 bis 9,
**dadurch gekennzeichnet,**
**dass** der Hitzeschild (100) als gebogenes Metall-Blechteil hergestellt ist.

11. Hitzeschild nach einem der Ansprüche 1 bis 10,
**dadurch gekennzeichnet,**
**dass** der Hitzeschild (100) eine Durchtrittsöffnung (34) aufweist zum Befestigen und Zentrieren des Hitzeschildes zwischen Lagergehäuse (14) und Turbinengehäuse (12) des Turboladers (16)

12. Turbolader mit einem Lagergehäuse (14) und einem Turbinengehäuse (12) und einem Hitzeschild (100) mit Merkmalen nach wenigstens einem der Ansprüche 1 bis 11, das zwischen Lagergehäuse (14) und Turbinengehäuse (12) angeordnet ist.

## Claims

1. Heat shield (100) for a turbocharger, which can be arranged between a bearing housing (14) and a turbine casing (12) of the turbocharger,
- wherein the heat shield is in the shape of a disc or a pot shape having one or more steps,
- wherein the disc or the pot shape has an outer rim (40) which lies in a plane arranged perpendicular to the central axis of the disc or pot shape,
**characterized**
- **in that** the outer rim (40) is provided with at least one cutout section (44) arranged in the circumferential direction, and
- **in that** the respective cutout section (44) forms, with the outer rim (40), a web section (42) running in the circumferential direction, and the web section (42) is curved in the axial direction in the manner of a wave spring in order to form a spring arm (30) with an axial spring travel.

2. Heat shield according to Claim 1,
**characterized in that**
at least one web section (42) is interrupted at a point in the circumferential direction, wherein the resulting partial sections of the web section (42) are curved in the axial direction.

3. Heat shield according to either of Claims 1 and 2,
**characterized in that**
the web section (42) has the same thickness throughout or at least one or more sections with different thicknesses.

4. Heat shield according to one of Claims 1 to 3,
**characterized in that**
the heat shield (100) has one or more web sections (42), wherein the web sections (42) are arranged on the outer rim (40), in a circumferential strip (46) concentric with the central axis.

5. Heat shield according to Claim 4,
**characterized in that**
the heat shield (100) has at least one or more additional strips (46), wherein the strips (46) each have one or more web sections (42) and wherein the strips (46) each have the same number or different numbers of web sections (42).

6. Heat shield according to at least one of Claims 1 to 5,
**characterized in that**
the web sections (42) of one or more strips (46) are identical or different in terms of shape, dimensions or arrangement.

7. Heat shield according to one of Claims 1 to 6,
**characterized in that**
the web sections (42) of at least two or more strips (46) are arranged at least partially offset with respect to one another or essentially flush with one another.

8. Heat shield according to one of Claims 1 to 7,
**characterized in that**
the web sections (42) are curved in the axial direction by a predefined identical or different amount.

9. Heat shield according to one of Claims 1 to 8,
**characterized in that**
the heat shield (100) is made of a heat-resistant metal material, in particular a metal alloy.

10. Heat shield according to one of Claims 1 to 9,
**characterized in that**
the heat shield (100) is made as a curved sheet metal part.

11. Heat shield according to one of Claims 1 to 10,
**characterized in that**
the heat shield (100) has a through-opening (34) for fastening and centring the heat shield between the bearing housing (14) and the turbine casing (12) of the turbocharger (16).

12. Turbocharger with a bearing housing (14) and a turbine casing (12) and a heat shield (100) having the features according to at least one of Claims 1 to 11, which is arranged between the bearing housing (14) and the turbine casing (12).

## Revendications

1. Bouclier thermique (100) pour un turbocompresseur, qui peut être disposé entre un carter de palier (14) et un carter de turbine (12) du turbocompresseur,
- le bouclier thermique se présentant sous la forme d'un disque ou d'une forme de godet à un seul ou à plusieurs échelonnements,
- le disque ou la forme de godet comprenant un bord extérieur (40) se trouvant dans un plan perpendiculaire à son axe central,
**caractérisé en ce que**
- le bord extérieur (40) est muni d'au moins une partie évidée (44) disposée sur la circonférence, et
- la partie évidée (44) forme, avec le bord extérieur (40), une partie d'entretoise (42) qui s'étend sur la circonférence et la partie d'entretoise (42) est pliée dans la direction axiale à la manière d'un ressort ondulé afin de former un bras de ressort (30) avec une trajectoire élastique axiale.

2. Bouclier thermique selon la revendication 1, **caractérisé en ce qu'**au moins une portion d'entretoise (42) est interrompu à un endroit sur la circonférence, les parties résultantes de la portion d'entretoise (42) étant ainsi pliées dans la direction axiale.

3. Bouclier thermique selon l'une des revendications 1 ou 2, **caractérisé en ce que** la partie d'entretoise (42) présente une épaisseur constante ou au moins une ou plusieurs portions avec une épaisseur différente.

4. Bouclier thermique selon l'une des revendications 1 à 3, **caractérisé en ce que** le bouclier thermique (100) comprend une ou plusieurs portions d'entretoise (42), les portions d'entretoise (42) étant disposées sur une bande circulaire (46), concentrique par rapport à l'axe central, sur le bord extérieur (40).

5. Bouclier thermique selon la revendication 4, **caractérisé en ce que** le bouclier thermique (100) comprend au moins une ou plusieurs bandes (46) supplémentaires, les bandes (46) comprenant chacune une ou plusieurs portions d'entretoise (42) et les bandes (46) comprenant chacune un nombre égal ou différent de portions d'entretoise (42).

6. Bouclier thermique selon l'une des revendications 1 à 5, **caractérisé en ce que** les portions d'entretoise (42) d'une ou plusieurs bandes (46) sont semblables ou différents en ce qui concerne la forme, les dimensions ou la disposition.

7. Bouclier thermique selon l'une des revendications 1 à 6, **caractérisé en ce que** les portions d'entretoise (42) d'au moins deux bandes (46) ou plus sont décalées entre elles au moins partiellement ou sont sensiblement alignées entre elles.

8. Bouclier thermique selon l'une des revendications 1 à 7, **caractérisé en ce que** les portions d'entretoise (42) sont pliées dans une mesure prédéterminée, égale ou différente, dans la direction axiale.

9. Bouclier thermique selon l'une des revendications 1 à 8, **caractérisé en ce que** le bouclier thermique (100) est constitué d'un matériau métallique résistant à la chaleur, plus particulièrement un alliage métallique.

10. Bouclier thermique selon l'une des revendications 1 à 9, **caractérisé en ce que** le bouclier thermique (100) est réalisé sous la forme d'une pièce de tôle métallique pliée.

11. Bouclier thermique selon l'une des revendications 1 à 10, **caractérisé en ce que** le bouclier thermique (100) présente une ouverture de passage (34) pour la fixation et le centrage du bouclier thermique entre le carter de palier (14) et le carter de turbine (12) du turbocompresseur (16).

12. Turbocompresseur avec un carter de palier (14) et un carter de turbine (12) et un bouclier thermique (100) avec des caractéristiques selon au moins l'une des revendications 1 à 11, qui se trouve entre le carter de palier (14) et le carter de turbine (12).
